# EUROPÄISCHE PATENTANMELDUNG

(11) **EP 4 710 771 A1**
(43) Veröffentlichungstag der Anmeldung: **18.03.2026**
(21) Anmeldenummer: 24200158.4
(22) Anmeldetag: 13.09.2024
(51) Int. Cl.: A21D 2/16, A21D 2/26, A21D 13/16, A23C 1/16, A23C 15/12, A23C 15/16, A23D 7/005, A23D 7/04, A23D 7/05

(54) **INDUSTRIEBUTTER MIT GELSTRUKTUR**

(71) Anmelder: DMK Deutsches Milchkontor GmbH, 27404 Zeven (DE)
(72) Erfinder: DÖRING, Sven-Rainer, 27404 Zeven (DE); Steffens, Marco, 27404 Elsdorf (DE)
(74) Vertreter: Fabry, Bernd

(57) **Zusammenfassung**

Vorgeschlagen wird eine Industriebutter mit Gelstruktur, dadurch erhältlich oder erhalten, dass man
(a) handelsübliche Butter so weit erwärmt, dass sie plastisch wird ohne zu schmelzen;
(b) die so erhaltene plastifizierte Butter abkühlt; und
(c) der abgekühlten Butter eine strukturbildende Komponente zusetzt, die ausgewählt ist aus der Gruppe, die gebildet wird von Kohlenhydraten, Lipiden und Proteinen sowie deren Gemischen.

## Beschreibung

### GEBIET DER ERFINDUNG

Die Erfindung befindet sich auf dem Gebiet der Milchprodukte und betrifft eine neue Industriebutter mit erhöhter Härte, ein Verfahren zu Ihrer Herstellung, ihre Verwendung zur Herstellung von speziellen Backwaren und die entsprechenden Backwaren.

### TECHNOLOGISCHER HINTERGRUND

Zu den beliebtesten Backwaren gehören der Blätterteig und ähnliche Produkte wie etwa Croissants oder Plunder. Blätterteig (auch *Feuilletage*) ist ein mehrlagiger Ziehteig. In den Grundteig aus Mehl, Salz und Wasser, wird durch mehrfaches Ausrollen und Zusammenschlagen Butter, seltener auch ein anderes Ziehfett wie Margarine, eingearbeitet, was als "Tourieren" bezeichnet wird. Während des Backens geht der Teig locker und blättrig auf. Durch die Backhitze verdampft das im Teig vorhandene Wasser, dehnt sich dabei aus und hebt das Gebäck an. Die Fettschichten wirken wie eine Sperre, sie lassen den Dampf nicht durch und halten ihn in der Teigschicht, bis das Teiggerüst stabil gebacken ist. Das Aufgehen (die Volumenvergrö-ßerung) des Teiges wird dabei nur durch den im Teig entstehenden Wasserdampf, nicht durch zusätzliche Triebmittel oder Hefe hervorgerufen. Daher wird diese Herstellungsart "physikalische Lockerung" genannt.

Blätterteig ist, abhängig vom Eigengeschmack der verwendeten Fette, weitgehend geschmacksneutral und wird ohne Zuckerzusatz hergestellt. Dadurch eignet er sich sowohl für süße als auch für herzhafte Gebäcke. Man unterscheidet Blätterteige nach der Art, nach der die Butter bzw. das Fett eingearbeitet wird:
- *Deutscher Blätterteig:* hierbei liegen die Fettschichten innen, der Grundteig umschließt ihn (enthält nach den Leitsätzen für Feine Backwaren des deutschen Lebensmittelbuches mindestens 62 Kilogramm Butter, Milchfetterzeugnisse oder Margarine oder praktisch wasserfreie Fette, bezogen auf 100 Kilogramm Getreideerzeugnisse)^{;}
- *Französischer Blätterteig:* hier umschließen die Fettschichten den Grundteig. Der Vorteil besteht darin, dass der Teig nicht austrocknen oder verkrusten kann, weil die Fettschicht außen liegt;
- *Holländischer Blätterteig:* hier das Fett wird würfelförmig (kühl) in den Teig gearbeitet, ohne Ruhepausen touriert (daher auch: *Blitzblätterteig* genannt) und vor allem zu Blätterteigböden verarbeitet, da er nicht so gut aufgeht (hochzieht). Holländischer Blätterteig nimmt durch seine kompakte Struktur eine Sonderstellung ein, denn das Gebäck kann nach dem Backen geschnitten werden. Durch diese Kompaktheit sind die Teige für spezielle Gebäcke, wie Prasselkuchen, Tortenböden, sowie Tortendecken, gut geeignet.

Der Unterschied zwischen Blätterteig und anderen tourierten Gebäcken wie Plunder oder auch Croissants liegt vor allem im Teig. Dem Blätterteig wird keine Hefe zugegeben, im Plunder kommt zusätzlich Hefe als Triebmittel zum Einsatz. Außerdem enthalten die Teige, je nach Bedarf und Rezept, Zucker, Milch und weitere Zutaten. Der in der türkischen, griechischen und arabischen Küche verbreitete ebenfalls tourierte Yufka-, Fyllo- oder Masoukateig ist dem Blätterteig sehr ähnlich. Es sind auch Abwandlungen mit Öl oder Hefe bekannt.

Wichtig ist, dass das fertige Gebäck einerseits nicht unmittelbar nach Butter oder Fett schmeckt, andererseits aber einen buttrigen Gesamteindruck - sowohl optisch wie geschmacklich - hinterlässt, da dies von Verbrauchern als Qualitätsmerkmal angesehen wird.

Das Marktsegment, in dem Blätterteigbackwaren beheimatet sind, ist sehr homogen und lässt kaum Produktvielfalt zu. Über den Verkaufserfolg entscheiden allein Qualität und Preis. Dabei besteht seitens der Verbraucher sehr wohl Interesse an solchen Backwaren, die über zusätzliche sensorische oder geschmackliche Eigenschaften verfügen. Diese sind jedoch in der Auswahl übersichtlich: in der Regel handelt es sich um Croissants oder ähnliches, denen man nachträglich einen Kern aus Schokoladencreme oder Marmelade injiziert hat. Ursächlich ist hier, dass die Herstellung der Produkte praktisch ausschließlich maschinell erfolgt, da es einer millimetergenauen Ausrichtung der Ausrollwalzen bedarf, um einen homogenen Teig und nach dem Abbacken auch ein qualitativ hochwertiges Produkt herzustellen. Für diese Abläufe eignet sich das Einarbeiten weiterer Zutaten, die auch noch den Backprozess überstehen müssen, nur sehr bedingt, wenn überhaupt.

Einen großen Einfluss auf die sensorische Qualität der Blätterteigwaren haben die Natur und natürlich auch die Menge der eingesetzten Butter. Übliche Industriebutter wird durch Rahmreifung - also eine Abfolge von Erwärmen und Abkühlen des Rahms zur Ausbildung einer semi-kristallinen plastischen Masse - und nachfolgender klassischen Verbutterung hergestellt und weist eine Härte von etwa 1 N auf. Da beim Tourieren Wärme in den Teig eingetragen wird, führt die Verwendung von Butter dieser geringen Härte leicht dazu, dass sie ausölt, die Transportbänder der hochautomatisierten Backstraßen verklebt oder Teig auf den Bändern zum Rutschen bringt, was in beiden Fällen zu einem Produktionsabbruch führt. Im Teig selbst kann es dazu führen, dass die Butterphase unterbrochen wird und der Teig bei Backen sich nicht mehr auflockert und somit ein mangelhaftes Produkt entsteht.

### STAND DER TECHNIK

Aus der EP 35 42 636 B1 (DMK) Industriebutter mit erhöhter Härte bekannt, die dadurch erhältlich ist oder erhalten wird, dass man handelsübliche Butter so weit erwärmt, dass sie plastisch wird ohne zu schmelzen und die so erhaltene plastifizierte Butter unter mechanischer Last wieder kühlt.

In der EP 35 69 061 B1 (DMK) wird eine Industriebutter mit erhöhter Härte beschrieben, die man erhält indem man Rohmilch in eine Magermilch- und eine Rahmfraktion auftrennt; die Rahmfraktion unter Zugabe von Wasser in eine Milchphase und eine wässrige Eiweiß-Lactose-Phase auftrennt, die Milchphase mit Hartfett versetzt und homogenisiert; und die homogenisierte Masse unter Scherung kühlt.

### AUFGABE DER ERFINDUNG

Eine erste Aufgabe der vorliegenden Erfindung hat daher darin bestanden, eine Industriebutter speziell für die Herstellung von Blätterteig, zur Verfügung zu stellen, die eine Härte im Bereich von etwa 2 bis etwa 5 N und insbesondere etwa 3 bis 4,5 N aufweist und keine Tendenz zeigt, beim Einsatz auf Bandstraßen auszuölen.

Eine zweite Aufgabe ist darin zu sehen, die Butter mit möglichst geringem technischem Aufwand herzustellen und dabei insbesondere auf die viel Zeit beanspruchende Reifung mit nachfolgender Verbutterung zu verzichten.

### BESCHREIBUNG DER ERFINDUNG

Ein erster Gegenstand der Erfindung betrifft Industriebutter mit Gelstruktur, dadurch erhältlich oder erhalten, dass man
(a) handelsübliche Butter so weit erwärmt, dass sie plastisch wird ohne zu schmelzen;
(b) die so erhaltene plastifizierte Butter abkühlt; und
(c) der abgekühlten Butter eine strukturbildende Komponente zusetzt, die ausgewählt ist aus der Gruppe, die gebildet wird von Kohlenhydraten, Lipiden und Proteinen sowie deren Gemischen.

Überraschenderweise wurde gefunden, dass man eine handelsübliche Industriebutter, wie sie insbesondere für die Herstellung von Backwaren wie Blätterteig verwendet wird, gegen den Effekt des Ausölens schützen kann, wenn man diese soweit erwärmt, dass sie plastisch wird, abkühlt, und dann mit einer strukturgebenden Komponente versetzt, nämlich einem Kohlenhydrat, einem Lipid oder insbesondere einem Protein oder deren Mischungen. Die strukturgebende Komponente verleiht der Butter die Konsistenz eines festen Oleogels, aus dem auch unter den Bedingungen, wie sie beim Einsatz auf langen Backstraßen herrschen, keine flüssigen Bestandteile mehr austreten.

Dabei ist der Begriff handelsüblich im weitesten Sinne zu verstehen und umfasst auch konventionell hergestellte Industriebutter, die eine entsprechend niedrige Härte aufweist. Unter niedriger Härte, die es zu steigern gilt, ist im Sinne eine Härte im Bereich von etwa 0,5 bis 1,5 N und vorzugsweise etwa 1 N aufweist.

### Plastifizierung

Unter Plastifizierung ist ein Erwärmungsschritt zu verstehen, bei der die Butter sich noch nicht verflüssigt hat, jedoch leicht knet- und formbar wird. Dieser Temperaturbereich kann je nach Fettgehalt der Butter etwa variieren, liegt jedoch typisch im Bereich von etwa 18 bis etwa 25 °C.

### Kühlung

Die Kühlung der Butter kann auch unter Last erfolgen. Unter dem Begriff "Kühlung unter Last" ist zu verstehen, dass die wie oben beschrieben plastifizierte Butter einer Kühlung in einem oder mindestens zwei in Reihe geschalteten Schabewärmeaustauschern unterworfen wird, dessen Endprodukt dann eine "gehärtete" Industriebutter darstellt, die eine Härte im Bereich von etwa 2 bis etwa 5N und vorzugsweise etwa 3 bis etwa 4,5 N aufweist. Bei der Kühlung unter Last geschehen zwei Prozesse gleichzeitig: zum einen werden besonders kleine Kristalle erhalten, die dann zweitens miteinander verhaken und so ein besonders stabiles Kristallgitter ausbilden, was einer erhöhten Härte entspricht.

### Strukturbildende Komponenten

Die strukturbildenden Komponenten können ausgewählt sein aus der Gruppe bestehend aus Polysacchariden, Lipiden, speziell Monoglyceriden und Proteinen, speziell hydrophoben Proteinen. Als Polysaccharide kommen beispielsweise Xanthan-Gum, Guar-Guar, Agar-Agar, Alginate und Tylosen, Ethylcellulose, Carboxymethylcellulose und Hydroxyethyl- und Hydroxypropylcellulose in Betracht. In einer bevorzugten Ausführungsform stellen die strukturbildenden Komponenten Proteine dar. Neben Milchproteinen kommen für die Anwendung dabei insbesondere pflanzliche Prolamine in Betracht. Typischerweise werden die strukturbildenden Komponenten in einer Menge von etwa 0,1 bis etwa 15 Gew.-%, vorzugsweise etwa 0,5 bis etwa 10 Gew.-% und insbesondere etwa 1 bis etwa 8 Gew.-% - bezogen auf die Butter - zugesetzt.

### Herstellverfahren

Ein weiterer Gegenstand der vorliegenden Erfindung betrifft ein Verfahren zur Herstellung einer Industriebutter mit Gelstruktur, umfassend oder bestehend aus den folgenden Schritten:
(i) Separation von Rohmilch in eine Magermilch- und eine Rahmfraktion;
(ii) Reifung der Rahmfraktion in an sich bekannter Weise;
(iii) Verbutterung der gereiften Rahmfraktion in an sich bekannter Weise;
(iv) Erwärmen der so gewonnenen handelsüblichen Butter auf etwa 18 bis etwa 25 °C;
(v) Abkühlen der erwärmten Butter gegebenenfalls unter mechanischer Last;
(vi) Zugabe und Einarbeitung der strukturbildenden Komponente; und
(vii) Formung der so gewonnenen Industriebutter.

Butter ist ein meist aus dem Rahm von Milch hergestelltes Streichfett, das nach EU-Verordnung zu mindestens 80 Prozent aus Milchfett besteht. Beim Butterungsprozess wird der Rahm geschlagen. Dadurch werden die Fettkügelchen des Milchfetts zerstört. Die Fetthülle bricht auf und das enthaltene Fett tritt aus. Jetzt können die Fettmoleküle untereinander verkleben. Dabei werden Teile der Fetthüllen, Wasser und etwas Milcheiweiß eingeschlossen. Aus der flüssigen Fett-in-Wasser-Emulsion wird eine feste Wasser-in-Fett-Emulsion. Der mit Abstand größte Teil dieser fettfreien Komponenten (Milchserum) tritt als Buttermilch aus. Die Butter selbst wird schließlich zu einer homogenen, geschmeidigen Masse geknetet, die anschließend geformt und abgepackt wird. Insofern stellen die Schritte (i) bis (iii) übliche und dem Fachmann notorisch bekannte Schritte dar.

Die Butterherstellung geht von einer Rahmfraktion aus, die durch Separation bei der Gewinnung von Magermilch aus Roh- bzw.Vollmilch gewonnen wird. Diese Rahmfraktion weist typisch einen Fettgehalt von etwa 37,5 Gew.-% und kann falls erforderlich durch Standardisierung, d.h. Zugabe von fremdem Rahm auf diesen Wert eingestellt werden.

Der Rahm wird pasteurisiert bzw. sterilisiert und anschließend einer so genannten Reifung unterworfen. Hierunter versteht man abwechselndes Erwärmen und wieder Abkühlen, was zur Ausbildung eines Kristallgitters führt und die Viskosität des Produktes ansteigen lässt. An dieser Stelle können dann zur Aromabildung auch Butterkulturen zugegeben werden bzw. eine Säuerung erfolgen.

Es folgt die eigentliche Verbutterung, bei der der gereifte Rahm bei etwa 10 °C in einer Butterungsmaschine mit rotierendem Zylinder geschlagen und gestoßen wird. Nach dem Abtrennen der Buttermilch wird eine handelsübliche Butter erhalten, die eine Härte im Bereich von etwa 0,5 bis etwa 1,5 N und vorzugsweise etwa 1 N aufweist.

Im Sinne der vorliegenden Erfindung weist die so erhaltene Butterphase vorzugsweise einen Fettgehalt im Bereich von etwa 80 bis etwa 88 Gew.-% und insbesondere etwa 81 bis etwa 85 Gew.-% auf.

Weiterhin bevorzugt ist, dass diese Butterphase einen Gehalt an fettfreier Trockenmasse (FFTM) im Bereich von 1 bis 3 Gew.-% und vorzugsweise etwa 2 Gew.-% aufweist. Die Mengen an Fett und Trockenmasse ergänzen sich jeweils zu 100 %, wobei die Wassermenge 16 Gew.-% nicht überschreiten darf, da es sich ansonsten nicht mehr um eine Butter gemäß EU-Verordnung handelt.

Im nächsten Schritt wird die weiche Butter erwärmt, so dass sie plastisch wird und wieder geformt und geknetet werden kann, aber sich nicht verflüssigt. Dies erreicht man typisch in einem Temperaturbereich von etwa 18 bis 25 °C. Anschließend erfolgt die Abkühlung, die insbesondere unter Last, d.h. unter Scherung wieder durchgeführt wird. Hierzu eignet sich vor zugsweise ein Schabewärmeaustauscher oder insbesondere mindestens zwei, vorzugsweise 2 bis 5 in Reihe geschalteter Schabewärmeaustauscher, die auch in dieser Anordnung als "Kombinator" bezeichnet werden. Bei einem solchen Bauteil wird das zu kühlende Produkt in das untere Ende des vertikalen Wärmetauschers gepumpt und fließt durch den Zylinder. Es wird permanent gerührt und durch Schaber von der Zylinderwand entfernt. Heiz- oder Kühlmedien strömen in dem ringförmigen Spalt zwischen dem Wärmetauschzylinder und der isolierten Ummantelung. Auf diese Weise wird am Ende des Austauschers als Produkt eine Industriebutter mit einer Temperatur von etwa 10 bis 16 °C abgenommen, die eine Härte im Bereich von etwa 2 bis etwa 5 N und insbesondere etwa 3 bis etwa 4,5 N aufweist.

Die nun abgekühlte Butter wird mit den strukturgebenden Komponenten behandelt. Dabei können diese entweder als Schicht aufgebracht oder durch Knetprozesse eingearbeitet werden.

### GEWERBLICHE ANWENDBARKEIT

Ein weiterer Gegenstand der Erfindung betrifft Backwarenrohlinge, umfassend oder bestehend aus
(a) einer Teigphase und
(b) einer Industriebutter wie oben beschrieben.

Bei der Teigphase handelt es sich vorzugsweise um einen Standard-Blätterteig, wie eingangs beschrieben.

Ein weiterer Gegenstand der Erfindung betrifft ein Verfahren zur Herstellung von Backwaren, vorzugsweise Croissants, umfassend die folgenden Schritte:
(i) Bereitstellen einer Teigphase;
(ii) Bereitstellen einer Industriebutter wie oben beschrieben,
(iii) Belegen der Teigphase mit der Industriebutter unter Erhalt eines Backwarenrohlings;
(iv) Abbacken des Rohlings.

Alternativ kann der Rohling vor dem Abbacken auch mehrfach gefaltet werden, so dass eine Schichtstruktur erhalten wird, wie sie für Blätterteig üblich ist.

Schließlich umfasst die vorliegende Erfindung auch noch die Verwendung einer Industriebutter wie oben beschrieben zur Herstellung von Backwaren, insbesondere Blätterteigbackwaren und besonders bevorzugt von Croissants.

### BEISPIELE

### BEISPIEL 1

### Herstellung von Industriebutter mit Milchproteinen

10 kg handelsübliche Butter mit einem Fettgehalt von 84 Gew.-%, einem Gehalt an fettfreier Trockenmasse von 2 Gew.-% und einer Härte von 1 N wurde unter Rühren auf 25 °C erwärmt, so dass eine plastische Masse erhalten wurde, die jedoch noch keine Flüssigkeit austreten ließ. Die plastifizierte Butter wurde kontinuierlich auf einen Kombinator bestehend aus 4 in Reihe geschaltete Schabewärmeaustauscher vom Typ APV Gerstenbeck-Schröder gegeben. Der Kombinator wies vier Temperierzone auf, nämlich von 17 auf 21 auf 17 und auf 12 °C und wurde bei einem Druck von 18,5 bar betrieben. Anschließend wurde der Butter 1 kg Milchproteine zugesetzt und diese durch Einkneten eingearbeitet. Es wurde eine Industriebutter mit einer festen Gelstruktur erhalten, die eine Härte von 3,2 N aufwies.

Die Butter wurde zur Herstellung eines Blätterteigs verwendet, der im vorgeheizten Backrohr bei 220 °C Ober- und Unterhitze 20 Minuten gebacken wurde. Es wurde kein Ausölen beobachtet.

### VERGLEICHSBEISPIEL V1

### Herstellung von Industriebutter ohne Milchproteine

10 kg handelsübliche Butter mit einem Fettgehalt von 84 Gew.-%, einem Gehalt an fettfreier Trockenmasse von 2 Gew.-% und einer Härte von 1 N wurde unter Rühren auf 25 °C erwärmt, so dass eine plastische Masse erhalten wurde, die jedoch noch keine Flüssigkeit austreten ließ. Die plastifizierte Butter wurde kontinuierlich auf einen Kombinator bestehend aus 4 in Reihe geschaltete Schabewärmeaustauscher vom Typ APV Gerstenbeck-Schröder gegeben. Der Kombinator wies vier Temperierzonen auf, nämlich von 17 auf 21 auf 17 und auf 12 °C und wurde bei einem Druck von 18,5 bar betrieben. Es wurde eine Industriebutter mit einer festen kristallinen Struktur erhalten, die eine Härte von 3,3 N aufwies.

Die Butter wurde ebenfalls zur Herstellung eines Blätterteigs verwendet, der im vorgeheizten Backrohr bei 220 °C Ober- und Unterhitze 20 Minuten gebacken wurde. Schon nach 15 Minuten wurden feine Öltröpfchen auf der Teigoberfläche beobachtet, nach Backende zeigte die gesamte Oberfläche einen Ölfilm.

## Patentansprüche

1. Industriebutter mit Gelstruktur, dadurch erhältlich oder erhalten, dass man
(a) handelsübliche Butter so weit erwärmt, dass sie plastisch wird ohne zu schmelzen;
(b) die so erhaltene plastifizierte Butter abkühlt; und
(c) der abgekühlten Butter eine strukturbildende Komponente zusetzt, die ausgewählt ist aus der Gruppe, die gebildet wird von Kohlenhydraten, Lipiden und Proteinen sowie deren Gemischen.

2. Industriebutter nach Anspruch 1, **dadurch gekennzeichnet, dass** man handelsübliche Butter einsetzt, die eine Härte im Bereich von etwa 0,5 bis 1,5 N aufweist.

3. Industriebutter nach den Ansprüchen 1 und/oder 2, **dadurch gekennzeichnet, dass** man die handelsübliche Butter bis auf eine Temperatur von etwa 18 bis etwa 25 °C erwärmt.

4. Industriebutter nach mindestens einem der Ansprüche 1 bis 3, **dadurch gekennzeichnet, dass** man die plastifizierte Butter einer Kühlung unter Last in einem oder mindestens zwei in Reihe geschalteten Schabewärmeaustauschern unterwirft.

5. Industriebutter nach mindestens einem der Ansprüche 1 bis 4, **dadurch gekennzeichnet, dass** man ihr als strukturbildende Komponente Milchproteine zusetzt.

6. Industriebutter nach mindestens einem der Ansprüche 1 bis 5, **dadurch gekennzeichnet, dass** man ihr die strukturbildenden Komponenten in einer Menge von etwa 0,1 bis etwa 15 Gew.-% - bezogen auf die Butter - zusetzt.

7. Verfahren zur Herstellung einer Industriebutter mit Gelstruktur, umfassend oder bestehend aus den folgenden Schritten:
(i) Separation von Rohmilch in eine Magermilch- und eine Rahmfraktion;
(ii) Reifung der Rahmfraktion in an sich bekannter Weise;
(iii) Verbutterung der gereiften Rahmfraktion in an sich bekannter Weise;
(iv) Erwärmen der so gewonnenen handelsüblichen Butter auf etwa 18 bis etwa 25 °C
(v) Abkühlen der erwärmten Butter gegebenenfalls unter mechanischer Last;
(vi) Zugabe und Einarbeitung der strukturbildenden Komponente; und
(vii) Formung der so gewonnenen Industriebutter.

8. Verfahren nach Anspruch 7, **dadurch gekennzeichnet, dass** man Rahm einsetzt, der einen Fettgehalt von mindestens 37,5 Gew.-% aufweist.

9. Verfahren nach den Ansprüchen 7 und/oder 8, **dadurch gekennzeichnet, dass** man die Rahmfraktion durch abwechselndes Erwärmen und Abkühlen reifen lässt.

10. Verfahren nach mindestens einem der Ansprüche 7 bis 9, **dadurch gekennzeichnet, dass** man die erwärmte Butter aus Schritt (iv) einer Kühlung in einem oder mindestens zwei in Reihe geschalteten Schabewärmeaustauschern unterwirft.

11. Verfahren nach mindestens einem der Ansprüche 7 bis 10, **dadurch gekennzeichnet, dass** man eine Industriebutter gewinnt, die eine Härte im Bereich von etwa 2 bis etwa 5 N und insbesondere etwa 3 bis etwa 4,5 N aufweist.

12. Backwarenrohling, umfassend oder bestehend aus
(a) einer Teigphase und
(b) einer Butter nach mindestens einem der Ansprüche 1 bis 6 oder nach dem Verfahren nach mindestens einem der Ansprüche 7 bis 11.

13. Backwarenrohling nach Anspruch 12, **dadurch gekennzeichnet, dass** die Teigphase ein Standard-Blätterteig ist.

14. Verfahren zur Herstellung von Backwaren, umfassend die folgenden Schritte:
(i) Bereitstellen einer Teigphase;
(ii) Bereitstellen einer Industriebutter nach mindestens einem der Ansprüche 1 bis 6 oder nach dem Verfahren nach mindestens einem der Ansprüche 7 bis 11;
(iii) Belegen der Teigphase mit der Industriebutter unter Erhalt eines Backwarenrohlings;
(iv) Abbacken des Rohlings.

15. Verwendung einer Industriebutter nach mindestens einem der Ansprüche 1 bis 6 oder nach dem Verfahren nach mindestens einem der Ansprüche 7 bis 11 zur Herstellung von Backwaren, insbesondere Blätterteigbackwaren.
